# EUROPEAN PATENT APPLICATION

(11) **EP 2 254 321 A1**
(43) Date of publication of application: **24.11.2010**
(21) Application number: 10163455.8
(22) Date of filing: 20.05.2010
(51) Int. Cl.: H04M 11/06, H04W 88/04

(54) **Device and method for setting up call switching connections for real time services in wide area mobile networks**

(30) Priority: 20.05.2009 ES 200930190
(71) Applicant: Vodafone Group PLC, Newbury Berkshire RG14 2FN (GB); Vodafone España, S.A.U., 28108 Alcobendas (ES)
(72) Inventor: Bustillo Velasco, Jaime, E-28050, Madrid (ES); Tenorio Sanz, Santiago, E-28050, Madrid (ES); Rogelio Perea, Martinez, E-28050, Madrid (ES); Zas Couce, Luis, E-28050, Madrid (ES); Dominguez Romero, Francisco, E-28050, Madrid (ES)
(74) Representative: Keston, David Arthur

(57) **Abstract**

A device for setting up call switching connections to deliver calls of real time services over a wide area mobile network is described comprising:
- At least one physical interface for communication with an analogue terminal equipment (TE) generating incoming calls of real time services;
- An adapting interface for triggering commands for establishing at least one radio access bearer with a total bit rate of 128 Kbps, for instance, double bearer of 64 Kbps. The adapting interface can be either external to the device (1) and used to connect with a user equipment (UE) of the mobile network, or an internal interface of the device (1') constituting a 3G UE which implements the method for establishing these connections in mobile networks for real time services.

The method comprises: receiving a call of a real time service from the terminal equipment (TE) and triggering commands which contain bearer capability information providing Call Switching connections with 128 Kbps.

## Description

### TECHNICAL FIELD OF THE INVENTION

The present invention relates to a method and a device for establishing Call Switching (CS) connections of 64/128 Kbps for voice or data transmission in real time, through a third generation (3G) or beyond 3G network, to provide real time services such as speech, fax service, video over CS, etc.

### BACKGROUND OF THE INVENTION

In the context of the latest strategies followed by 3G network operators, one trend is to offer and transport all existing fixed services (supported by PSTN) over the Mobile Network as well. This meets high demand by the Business Segment of customers, for example in the SOHO (single office/home office) market.

One of these types of services which are crucial in any business portfolio is fax service. Generally, enterprise customers with heavy fax traffic can use a fax server running on a server computer equipped with one or more fax-capable modems, which support fax transmission protocol T.30 and are attached to PSTN (Public Switched Telephone Network) by fixed telephone lines usually. More recently, fax service can be provided with T.38 technology ("Fax over IP") to transmit the signal over an IP network.

Fax service, plain old telephone service (POTS) or point of sale terminals (POS terminals are computerized devices equipped with analogue modems for performing transactions by a debit/credit card) are widely used over the fixed lines by applying different protocols (T.30, T.38 or G.711, etc).

In order to support these real time services (fax, POTS, POS, etc.), the Basic Rate Interface (BRI, 2B+D, 2B1D) is used. BRI is defined in the physical layer standard 1.430 produced by the ITU as an Integrated Services Digital Network (ISDN) configuration consisting of two 64 Kbps "bearer" channels (B channels) for voice or user data and one 16 kbit/s "Delta" channel (D channel) for any combination of data, control/signalling and X.25 packet networking. Both B channels could be bonded together giving a total data rate of 128 Kbps.

In 3G (and beyond 3G) networks, different domains are established depending on the transfer mode for traffic transmission of the different services: the Circuit or Call Switching (CS) mode and Packet Switching (PS) mode. Also, several traffic classes are distinguished according to the kind of service. A radio access bearer (RAB) with determined capability defined by a series of attributes is assigned to each service. Some standard examples of linking radio bearers to services are given by the 3GPP in the Technical Specification TS 34.108 and shown in next table 1.

**Table 1**

| **RAB** | | | **CS/PS** | **Residual BER** | **Services** |
|---|---|---|---|---|---|
| **Traffic class** | **SSD** | **Max. rate, kbps** | | | |
| Conversational | Speech | UL:4.75-12.2 DL:4.75-12.2 | CS | 5x10⁻⁴ 1x10⁻³' 5x10⁻³ | AMR speech |
| Conversational | Unknown | UL:64 DL:64 | CS | 1x10⁻⁴ or 1x10⁻⁶ | UDI 1B, 64k 3G-324M^{[4]} |
| Conversational | Unknown | UL:32 DL:32 | CS | 1x10-⁴ or 1x10⁻⁶ | 32k 3G-324M |
| Conversational | Unknown | UL:28.8 DL:28.8 | CS | 1x10⁻³ | Transparent modem |
| Streaming | Unknown | UL:14.4 DL:14.4 | CS | 1x10⁻³ | FAX |
| Streaming | Unknown | UL:28.8 DL:28.8 | CS | 1x10⁻³ | FAX PIAFS 32 kbps |
| Streaming | Unknown | UL:57.6 DL:57.6 | CS | 1x10⁻³ | Modem^{[6]}, FTM, PIAFS 64 kbps |
| Streaming | Unknown | UL:64-128 or DL:64-384 | CS | 1x10⁻³ or 1x10⁻⁴ | Streaming video, uni-directional |
| Interactive or Background | N/A | UL:32-384 DL:8-2048 | PS | 1x10⁻³ or 1x10⁻⁴ | Packet |

| | | | | | |
|---|---|---|---|---|---|
| Note that traffic of a service such as FAX is classified as streaming and assigned to radio access bearers with a bit rate less than 128 Kbps of BRI. | | | | | |

Therefore, it is desirable for the Mobile Network Operators (MNOs) to offer to all the Customer Segments (especially, the SOHO) fax service or other real time services in all the situations in which MNOs serve total communications (i.e., granting data connectivity, quick activation, protected service, etc.) by using their wide area mobile networks to provide this kind of services, instead of existing fixed lines.

### SUMMARY OF THE INVENTION

The present invention allows real time fax transmission (in digital formats of Group 3 and 4 faxes) and any other real time service (data transmission in real time transactions, for instance. executed by POS devices; video over call switching; voice, etc.) to use transparently up to two 64Kbps bearers provided by the mobile network in the Call Switching (CS) domain. These two CS connections of 64Kbps emulate an ISDN BRI (2x 64K channels) and enable to perform a real time operation as in the fixed line.

The present invention uses preferably the radio access bearer (RAB) of 64Kbps in uplink (UL) and 64Kbps in downlink (DL), associated by the 3GPP TS 34.108 with traffic of conversational class such as video-call, to carry the traffic of fax and the other aforementioned real time traffic. Conversational 64/64 is currently supported by all the 3G (Access and Core) networks. Other RABs defined in the 3GPP TS 34.108 for providing 128Kbps of transmission rate in the CS domain can be also used for this purpose (refer to table 1).

The present invention establishes the physical interface between the originating or calling terminal (a G3 or G4 fax machine, a plain old telephone, a POS device, etc.) and a device which supports this physical interface and setup the protocol conversions needed in order to carry out the fax or any other real time service transmission over the CS bearer(s).

The communication between the interface converting device and the originating terminal (a Terminal Equipment: TE) can be done through standard AT commands, typically used by computers to communicate with modems, defined in the 3GPP Technical Specification 27.007. AT commands are interchanged between a Terminal Adapter (TA), which is the physical equipment where AT command interpreter resides (for example, the user's mobile phone) and the Terminal Equipment (TE), which is the physical equipment from where applications communicate with TA using AT commands (e.g., a computer, a digital fax machine, ...). AT (command) stand for ATtention; this two-character abbreviation is always used to start a command line to be sent from TE to TA.

An aspect of the invention refers to a device for setting up CS connections to provide real time services in wide area mobile networks (supporting 3G or beyond 3G technologies), which is connectable to at least one TE capable of originating a real time transmission (fax, voice, video, etc.). Said device comprises:
- At least one physical interface to communicate with the originating terminal equipment (fax, POT, etc.) converting analogue originating signals to digital format, for example, through FXS (Foreign exchange Station) telephone interface ports, USB (Universal Serial Bus) ports, etc.
- An adapting interface to trigger the proper commands during the call establishment period in order to setup the CS connection(s) providing radio access bearer(s) with bit rate of 128 Kbps. Preferably, AT commands are exchanged through the adapting interface between the device and a User Equipment (UE), which relays the call (e.g., a 3G phone) from the terminal equipment (TE) connected to the physical interface. According to different possible embodiments of the invention, the adapting interface can be either an internal interface (using either normalized AT commands or specific proprietary commands) if the invention is implemented as an adaptor device integrated in a 3G UE either an external interface in an stand-alone box implementation to connect with an existing 3G UE (e.g., the user's mobile phone).

Another aspect of the invention deals with a method for setting up connections in CS domain of mobile networks to provide real time services (voice, fax, video over CS,...), which comprises the following steps:
- receiving a call establishment request from at least one TE (fax machine, POS device, fixed phone, mobile phone, etc.) which can send(/receive) calls of a real time service;
- triggering a series of commands (e.g., from the basic AT command set) to setup at least one Call Switching connection; the commands are generated by a device connected to the TE and at least one of said commands contains radio access bearer capability information including RAB bit rate of 128 Kbps (e.g., 2x64 Kbps).

In the preferred case that AT commands are triggered to setup the CS bearers, the particular commands and parameters to be used are the AT+CBST and the AT+D, according to AT command parameter syntax as follows AT+CBST parameter command syntax

| Command | Possible response(s) |
|---|---|
| +CBST=[<speed>[,<name>[,<ce>]]] | |
| +CBST? | +CBST: <speed>,<name>,<ce> |
| +CBST=? | +CBST: (list of supported |
| | <speed>s),(list of supported |
| | <name>s),(list of supported <ce>s) |

AT+CBST command is used to select the bearer service <name> with data rate <speed>, and the connection element <ce> to be used when data calls are originated (refer 3GPP TS 22.002).

To setup the call, the AT+D command is used, as defined by ITU-T V.250 (Dial command D). V.250 dial command D lists characters that may be used in a dialling string for making a call or controlling supplementary services in accordance with 3GPP TS 22.030. Their use in GSM/UMTS is listed in this subclause, as well as new dial modifiers applicable only to GSM/UMTS are introduced. For a device supporting AT commands only, it is mandatory to support the control of supplementary services in accordance with 3GPP TS 22.030 through the dial command or through the specific supplementary service commands (+CCFC, +CLCK, etc.), where 3GPP TS 22.030 identifies the supplementary services as mandatory.

The bearer capability information included in the triggered commands also contains the information transfer capability, which is defined in ISDN to have one of two possible valid values: either UDI either RDI. UDI stands for Unrestricted Digital Information, also called 64U or 64C ("64 Clear", the term "clear" meaning that the 64 Kbps channel is transparently or clearly carrying traffic; the information transfer rate for call traffic is set to 64 Kbps). RDI stands for Restricted Digital Information, also called 64R ("64 Restricted"). In the context of the invention, the information transfer capability is set to the information transfer capability (UDI).

In this case that it is needed to setup 128 Kbps (2x64Kbps), respective commands with the same bearer capability information are sent from the originating and terminating parties (mobile or fixed equipment), so that a double bearer of 64 Kbps transparent can be setup in the Mobile Network.

The Core Network (CN) attempts to complete calls using the bearer capability information, in addition to the information provided by the mobile network operator (MNO). Since UDI is requested for the call establishment, the CN routes the call over facilities designated by the MNO as supporting UDI.

Conversational 64/64 UDI is supported by the Access Network and Core Network is a transparent bearer to carry the traffic, so it can well be used to transport transparently, for example, fax transmission protocol (T.30) for Group 3 and 4 between the originating and terminating fax machine. The 3G Mobile Network inter-connects the two fax machines through the normal PSTN-gateways used to connect mobile and fixed network.

A major advantage of present invention is important Bandwidth savings (around 300 Kbps per each connection) on the Radio interface, since all the overheads introduced by using IP are removed

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows two different embodiments of the invention: (A) a device for setting up call switching connections for real time services connected to 3G user equipment, (B) a device for setting up call switching connections for real time services integrated into one single 3G user equipment.
Figure 2. - It shows a message diagram representation of the method for setting up call switching connections for real time services implemented by the device shown in the Figure 1(A), in accordance to a preferred embodiment of the invention.

### DETAILED DESCRIPTION OF THE INVENTION

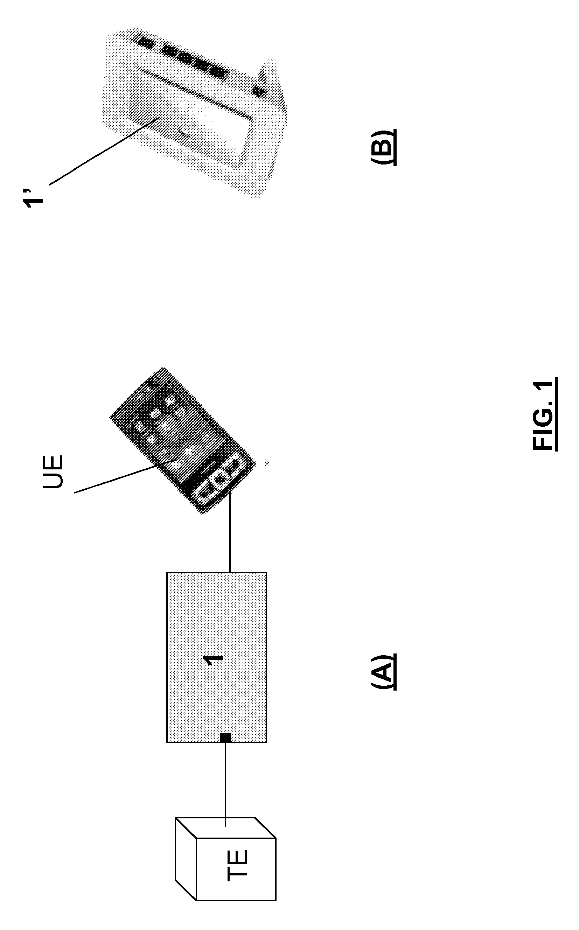

Figure 1 shows a device (1, 1') for setting up CS connections in 3G networks for calls of a real time service, for example, fax, generated from a terminal equipment (TE) which the device (1, 1') can be connected to. In Figure 1(A), according to a possible embodiment of the invention, the device (1) is also connected with a 3G user equipment (UE), for instance, a 3G mobile phone, so that this device (1) acts as a external adaptor of POTS line for services such as voice, fax or others to be carried in real time by call switching. Another possible embodiment of the invention relates to a single device (1') as shown in Figure 1(B) which has the adaptor of POTS line integrated in a 3G user equipment.

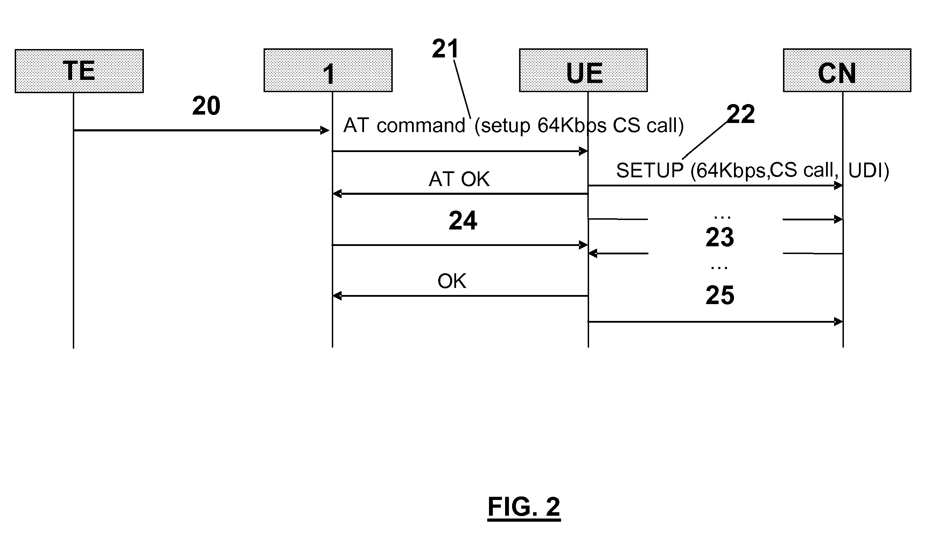

Figure 2 shows the message exchange between the device (1) and the user equipment (UE) at the originating or calling party. When the device (1) receives a message for call establishment request (20) from the terminal equipment (TE) which is connected to, the device (1) triggers an AT command (21) containing the information of the radio access bearer required, that is, 64Kbps CS channel. The bearer capability is introduced in a SETUP message (22) when the mobile user equipment (UE) wants to establish a call. In the case of mobile terminating call, the MSC/HLR in the Core Network (CN) sends the SETUP message with the information of bearer capability. This is used to define the type of call to be set up: telephony, data, video, etc.

Bearer capability information element has, among many other parameters, the following options for the CS calls as defined in 3GPP TS 22.001:

| Bit order | Meaning of the bit values |
|---|---|
| 3 2 1 | |
| 0 0 0 | speech |
| 0 0 1 | unrestricted digital information |
| 0 1 0 | 3.1 kHz audio, ex PLMN |
| 0 1 1 | facsimile group 3 |
| 1 0 1 | Other ITC [See Octet 5a] |
| 1 1 1 | reserved, to be used in the network. |

When there is a FAX call from a mobile user equipment (UE) to a fixed FAX in the PSTN, it is needed to setup the CS 64K bearer in the mobile side. So, the Bearer capability has information transfer capability set to Unrestricted Digital Information. Then in the Core Network (CN), it is needed to intercept and modify this message to 3.1 kHz audio in order to convert the call to reach the external FAX in the PSTN. Then the signalling nature of the call is changed so as to enable proper end-to-end signalling inter-working. This behaviour is achieved for subscribers using compatible line by means of Intelligent Network triggers at both originating and terminating parties of the calls.

When there is a FAX call from PSTN to a User Equipment (UE) in the Mobile Network, the call is coming with a 3.1 kHz audio capability and the Core Network (CN) requires to modify this message to Unrestricted Digital Information with 64 Kbps establishment and to make the data conversion.

Once the transparent CS 64K bearer is setup in uplink as well as in downlink, a proprietary message (23) for indicating data bypass over the 64K channel is sent by the device (1). The call is normally established (24). Then, a call setup confirmation is received by the device (1) and the data of the real time service is relayed (25) by the device (1) to the Mobile Network through the mobile user equipment (UE), which performs said transmission using the 64K radio bearer previously negotiated with the Core Network (CN).

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

**1.** Device (1, 1') for setting up call switching connections for real time services in wide area mobile networks, comprising:
- at least one physical interface through which the device (1, 1') connects and communicates with an analogue terminal equipment (TE) capable of generating an incoming call of a real time service;
- an adapting interface through which the device (1, 1') triggers commands for requesting and establishing at least one radio access bearer to carry the incoming call in Call Switching mode with a total bit rate of 128 Kbps.

**2.** Device (1) according to claim 1, wherein the adapting interface is used to connect with a user equipment (UE) of the wide area mobile network.

**3.** Device according to any preceding claims, wherein the adapting interface is used to send at least one AT command for requesting radio access bearer when the incoming call is received through the physical interface and to translate the AT command into a message comprising radio access bearer capability information which contains Unrestricted Digital Information and a transfer rate set to 64 Kbps for uplink and downlink.

**4.** Device according to any preceding claims, wherein the adapting interface is used to send at least one AT command for requesting the at least one radio access bearer.

**5.** Device according to any preceding claims, wherein the physical interface is selected from USB and FXS.

**6.** Device according to any preceding claims, wherein the physical interface is used to connect with the analogue terminal equipment (TE), which is selected from a fax terminal or an analogue modem.

**7.** Device according to claim 6, wherein the adapting interface is used to send at least one AT command for requesting radio access bearer with a transfer rate set to 64 Kbps for uplink and downlink when a fax call is received and delivering the fax content over the radio access bearer.

**8.** Method for setting up call switching connections for real time services in wide area mobile networks, comprising:
- receiving a call establishment request of a real time service from a terminal equipment (TE);
**characterized by** further comprising:
- triggering commands to setup at least one Call Switching connection when the call establishment request is received, the commands being generated by a device (1, 1') connected to the terminal equipment (TE) and comprising radio access bearer capability information of at least one radio access bearer providing with a total bit rate of 128 Kbps.

**9.** Method according to claim 8, wherein the call is established and routed as Unrestricted Digital Information to be carried over a double radio access bearer of 64 Kbps.

**10.** Method according to any of claims 8-9, wherein the call is a fax call or a call from an analogue modem..

**11.** Method according to any of claims 8-11, wherein the commands are AT commands.
